# EUROPEAN PATENT SPECIFICATION

(11) **EP 0 525 363 B1**
(45) Date of publication and mention of the grant of the patent: **17.03.1999**
(21) Application number: 92110189.5
(22) Date of filing: 17.06.1992
(51) Int. Cl.: G06F 3/14, G09G 5/02

(54) **Color video display controller for multi-player gaming systems**
Farbvideoanzeigesteuergerät für Videospielsysteme für mehrere Spieler
Dispositif de commande d'affichage vidéo en couleurs pour des systèmes de jeu vidéo de type multi-joueurs

(30) Priority: 28.06.1991 US 722918
(43) Date of publication of application: 03.02.1993
(73) Proprietor: GTECH CORPORATION, West Greenwich, Rhode Island 02817 (US)
(72) Inventor: Wasti, Hamid A., Cumberland, RI 02864 (US); Meyers, Kristin R., North Kingstown, RI 02852 (US)
(74) Representative: Bauer, Wulf, Dr.

(56) References cited:
- EP-A- 0 065 423
- WO-A-91/09378
- GB-A- 2 148 135
- GB-A- 2 173 077
- US-A- 3 889 054
- US-A- 3 956 739
- US-A- 4 139 863
- US-A- 4 709 329
- US-A- 4 775 937
- CHIP ZEITSCHRIFT FUER MIKROCOMPUTER-TECHNIK no. 9, September 1979, WURZBURG DE pages 40 - 71 T.KÖTHER 'Apple mit Biâ'

## Description

The invention relates to wagering systems, especially wagering game systems associated with retail lottery agent terminals.

US-A-477 5937 discloses a betting system having the following features - a central computer system (central control unit 1), which manages entry validation in a wagering game having a plurality of players at diverse locations (different betting terminals) and which is also suitable for crediting of winning entries; - a plurality of agent terminals (betting terminals) in data communication with the central computer system, each operable for managing player data input and issue of player entries for a plurality of successive players involved commonly in wagering game, the agent terminals being interactively operable as point of sale subject to supervisory control by the central computer. The agent terminals may be provided with display means, which implies the presence of a display controller. The wagering system comprises also a plurality of TV monitors that, as such, are not interactive with players. The TV monitors are controlled directly by the central computer system.

GB-A-2148135 teaches an electronic video lottery system. It refers to a display controller architecture that is suitable for displaying on a TV-receiver an image coresponding to data received from a host computer. Data defining at least partly an image to be displayed are stored in a ROM part of the memory.

EP-A-65 432 discloses a display apparatus having a display controller including a digital processor having means for data communication with an external system, to supply to the digital processor encoded data relating to an image to be displayed under control of said processor; data memory means and program memory means coupled to the digital processor, the data memory means including RAM for storing information at least partly defining an image to be displayed under control of the digital processor, and the digital processor being operable to produce image data therefrom; a control logic circuit coupled to the digital processor to feed said image data into means for storing a pixel field; video encoder means for converting the pixel field into a composite video output operable to transmit composite video information; and a standard commercial television receiver which displays the image.

GB-A-2173077 teaches an RF signal connection arrangement, which allows to interconnect a number of sources of RF modulated signals and a standard commercial television receiver.

Computer systems adapted to display data on one or more video monitors are known. Typical video monitors for computer systems are relatively high performance devices as compared to standard commercial television receivers. High speed or high capacity interfaces for converting high resolution binary pixel data to RGB or composite video signals are needed, and the deflection circuits are generally adapted for a higher degree of resolution and convergence than is necessary for display of moving scenes of the type broadcast by commercial television stations.

Resolution and convergence demands are relatively greater for larger displays, and video monitors for computer systems therefore are normally small. Although it is possible to provide a large format video monitor for a computer system, the added complexity of the circuitry is such that the display is prohibitively expensive for many uses. For example, the cost of a sixteen inch video monitor may be approximately equal to the cost of a sixteen inch standard commercial television receiver. However, a nineteen inch video monitor may cost three times as much as a nineteen inch standard commercial television receiver, and a twenty-five inch video monitor may cost as much as ten times as much as the same size of commercial television receiver.

A typical video monitor for computer data is coupled to a workstation, and displays information to the operator of the workstation. In such an environment there is no need for a large format display, and in fact a large display can be less comfortable for viewing by the operator sitting in front of the display than a smaller one because the larger display may require the viewer to turn his or her head. It is known, however, to provide a composite video output, and optionally a radio frequency modulator, for coupling the display output of a computer to a commercial television receiver. This arrangement is typically for low end home computers, wherein the computer controls the display for operating a video game or the like on a home television. Such devices are arranged to drive a single commercial television with a pre-formatted, stored display field, often including the display of movable elements (sometimes called sprites) under control of the computer and its operator. Although given sufficient data capacity the video game can store a plurality of images such as the individual playing backgrounds through which the player advances in the video game, the display fields themselves are not changeable and simply form a background for the movable elements. Furthermore, there is no need to employ more than one display device because the operator of the computer (e.g., player of the video game) can only look at one display at a time.

A different form of display system is known in connection with data displays to be viewed simultaneously by a number of viewers at various locations. Such systems are well known, for example, in connection with display of flight information in airport terminals. The data displayed is limited to columnar displays of alphanumeric characters according to digital data received from a central computer system. Characters are displayed by each display monitor according to the data which is transmitted to the display terminal. There is no capability of variably formatting a video signal for a plurality of commercial television receivers coupled to a local controller which generates a composite video signal in a changeable manner.

Certain games, such as keno, are played using some form of display sign or the like for keeping a number of viewers apprised of the progress of the game. In keno, players choose a predetermined number of play entry numbers from a series of available entries in a lot, and then a series of numbers are drawn one at a time to determine winners. Players whose entries match a certain number of those drawn are winners. Similarly, in lotto games, winning is determined by matching a predetermined number of successively drawn numbers. Prompt and wide display of the numbers drawn to determine the winners is an important aspect of these and other games, is exciting for the players, and encourages players to enter. It is known to provide an electronic sign having lights to designate numbers drawn in a keno game, and lottery agencies frequently televise the drawing of lotto numbers. Of course a fixed sign is not at all variable in format, and a television program is not variable in format under control of a local video controller.

Another example of a display system used in connection with games involves display of bowling information on overhead displays. The display in this case is also unchangeably formatted in the form of a background grid delineating the players and frames. Each lane or pair of lanes has interactive input means for its single display terminal, located above the respective bowling lane.

It would be advantageous to provide a display system which can truly be formatted under computer control for display of data to a plurality of viewers. For use by lottery agents, a video controller for this purpose should be controllable at least partly by the lottery central computer and in order to be cost effective as well as accessible to numerous players the controller must be arranged to operate a plurality of commercial television receivers. By providing a display system which can incorporate not only alphanumeric data and stored backgrounds, but also can reformat sections of the display, for example to include graphical images such as logos and to reposition alphanumeric data in the reformatted image, a versatile display arrangement is provided. The simultaneous display of alphanumeric data, graphical segments and backgrounds is particularly applicable to a wagering system, wherein the display keeps the players apprised of information respecting the game, allows controlled display of not only successive games of one type or successive display formats relating to a game, but also can display a progression from a game using one display format and relating to one set of data, to a game using a completely different format and relating to a different set of data.

It is an object of the invention to provide a versatile and inexpensive wagering system for operation of a plurality of standard commercial television receivers displaying changeable and reformattable information.

It is also an object of the invention to incorporate in a multiple viewer display system of a wagering system the ability to handle logos and similar graphical segments, and specifically digitized images, displayed in changeable format under computer control.

It is another object of the invention to enable at least limited animation in an image displayed in such a multiple viewer arrangement.

It is another object of the invention to provide driving means for a plurality of standard commercial television receivers, especially with large screen displays, for use by the customers of a retail gaming operation in monitoring the progress of one or more wagering games.

It is a further object of the invention to provide a terminal device for coupling in data communication with a central lottery computer system, and with a lottery agent terminal, operable under control of the central computer system and the agent terminal to format and generate in composite video a mixed display of data at the initiation of one of the central computer system and the agent terminal, for displaying to a plurality of lottery players information of interest to the players in connection with at least one lottery game in progress.

These objects are solved by the wagering system of Claim 1. The invention provides a display system wherein a data processor controls the generation of a composite video signal from image data and/or image attribute data coupled to modify a signal transmitted to a plurality of standard commercial television receivers which need not be modified. Means are included for formatting and displaying changeable graphic screens, and alphanumeric data and graphical image segments such as logos and messages over backgrounds, enabling a whole or partial image or series of images to be displayed on a number of large screen television receiver displays at a fraction of the cost of a computer video monitor.

The display controller is advantageously embodied using programmable logic arrays for coupling control and data signals from the digital processor to the memory elements, serial communication interface elements for communication with the central computer via the agent terminal, video encoder and the like. Whereas the logic arrays are programmable the controller is readily set up and readily converted to a desired mode of operation, for example for providing programmed sequences of displays, setting up for use of PAL or NTSC television receivers, etc., and accordingly is quite versatile. However, the controller requires a small number of components, and in conjunction with standard unmodified television receivers provides an inexpensive and effective display system which is particularly useful for application to networked wagering games such as lotto, keno and the like.

There are shown in the drawings exemplary embodiments of the invention as presently preferred. It should be understood that the invention is not limited to the illustrated embodiments, in accordance with the disclosure and claims as a whole. In the drawings,
Fig. 1 is schematic diagram illustrating the components of the video controller according to the invention and their interconnection signal paths and busses; and,
Fig. 2 is a block diagram of a networked wagering system according to the invention, including a central computer and a plurality of agent terminals including customer display means.

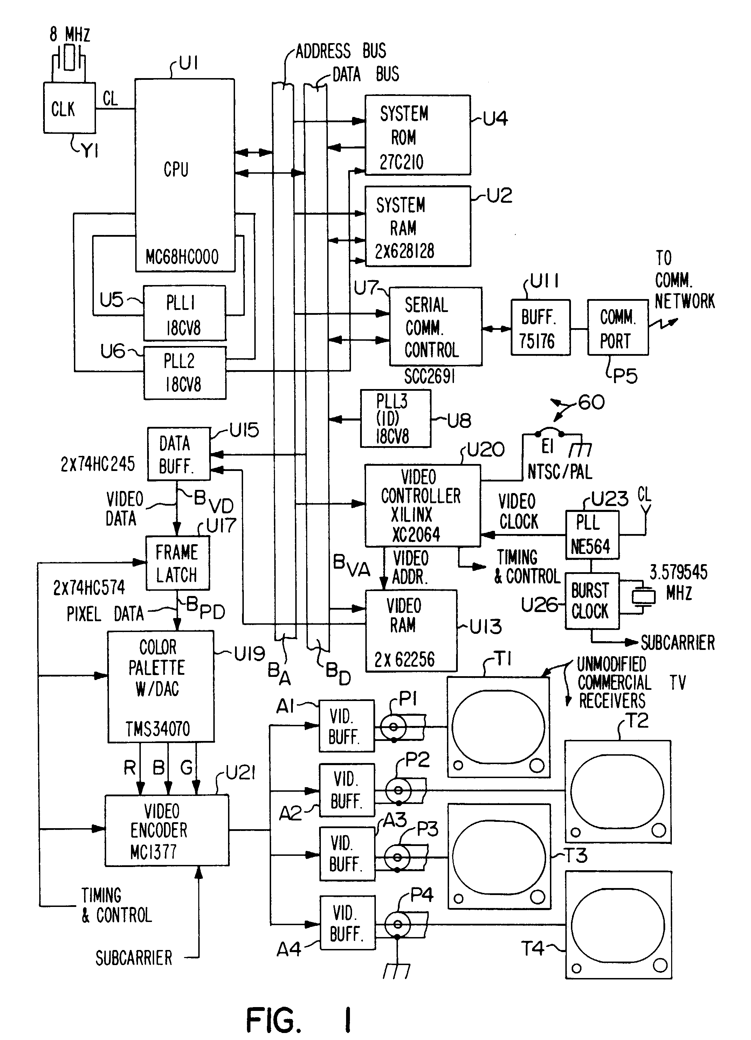

The video controller 60 of the invention, as shown in Fig. 1, includes a digital processor U1, for example Motorola microcomputer model MC68HC000, in data communication with a communications network via serial communications controller U7, and adapted to control generation of image signals to be displayed on a plurality of unmodified commercial television receivers T1-T4 via their composite video or antenna inputs. The digital processor or CPU U1 is driven by clock circuit Y1, which has a crystal oscillator defining an instruction cycle of 8MHz or 0.12µS. CPU U1 is coupled to a 23 bit address bus B_{A} and to a 16 bit data bus B_{D}, for memory addressing and data exchange with a system read only memory U4 and random access memory U2. The controller requires 64K of RAM and 128K of ROM, and is capable of supporting up to 256K of RAM and ROM using this number of address bus lines. The RAM U2 is shown as a single block, but according to the preferred embodiment includes two 64K RAM ICs. Model numbers of specific integrated circuits of a preferred embodiment of the invention are shown throughout Fig. 1.

Two programmable logic arrays U5 and U6 are coupled to CPU U1 and to the system memories U2 and U4 for decoding CPU signals to enable bus data transfers and other functions, as well as to signal the CPU U1 at its inputs. Programmable logic array U5 is arranged to decode signals to generate interrupts to CPU U1, such as an interrupt generated from an end-of-frame or similar signal from the serial communications controller U7, etc., and provides bus error signals in the event of an attempt to access an invalid address. Logic array U5 generates chip enable signals for selecting ROM U4 or one of the individual chips of RAM U2, and also for selecting a read function for memories U2 or U4 or a write function for memory U2. These functions are selected based on outputs of CPU U1 during bus cycles defined by the outputs of CPU U1. Additionally, logic array U5 is arranged to check for acknowledge signals on the bus in response to data transfers for all elements coupled to the system busses except the video RAM U13, which is discussed hereinafter.

ROM U4 contains programmed instructions to be executed by CPU U1, and can contain data value constants and the like. Preferably, ROM U4 also stores constants to be downloaded into additional elements of video controller 60 upon initiation of the system, for example for programming Xilinx field programmable gate array U20, which generates timing and control signals for operating the video RAM U13, video encoder U21, color palette U19 and data latch U17. It is also possible to arrange to have the programming for the Xilinx programmable array U20 varied during operation under control of CPU U1 and/or to obtain coding for such elements by downloading from a remote location along the serial communications link of serial controller U7, buffer U11 and communications port P1.

In addition to addressing the system memories U2 and U4, CPU U1 uses the system address bus B_{A} to address the serial communication controller U7 and the Xilinx programmable array U20. By reading and writing appropriate data to the address and data busses B_{A} and B_{D}, and in conjunction with control signals from programmable arrays U5 and U6, the CPU U1 coordinates operation of controller 60.

The system ROM U4 and RAM U2 can be used to store instructions respecting images to be displayed on the television receivers T1-T4, and in particular to store data representing attributes of certain of the images to be displayed. Additionally, controller 60 is arranged to receive data from the communication network including additional and/or alternative attributes to be displayed by controller 60, as well as entire image fields or segments of image fields to be inserted into the image otherwise defined by stored attribute data.

Communications along the serial communication path of serial controller U7, buffer U11 and port P5 are bidirectional. Programmable logic array U8 stores an identification code unique to the particular controller 60, such as a serial number, for use by a remote central computer communicating with the controller 60. Data received at controller 60 along the communication path can include an encoded identification code for comparison with the code stored in logic array U8, thus allowing the remote computer to address individual controllers 60 in this manner. Alternatively, the identification code can be transmitted to the remote computer together with acknowledgement of a transmission or with other data, allowing the remote computer uniquely to determine the source of a transmission it receives on communication channels open to a plurality of controllers 60. In a network including such identification it is not necessary for all the controllers to be identical or to be operated identically because the remote computer can tailor transmissions to the controller, and interpret transmissions received from the controller, in accordance with data stored at the remote computer relating to the character of the controller or the establishment in which it is located.

The serial communications controller U7 is coupled to buffer U11, which is bidirectionally operable to interface between TTL levels on the controller side of buffer U11, and standard communications formats at the communication port P5, coupled to the communication network. Although various buffers are possible for providing such an interface, the preferred embodiment uses input and output sections for buffer U11 which convert between TTL and RS422 standards. One of the inputs to serial communications controller U7, generated by the presence or absence of jumper E1, selects whether the controller is set for processing images according to the NTSC format or the PAL format, allowing incoming frame information to be decoded accordingly, and prompting CPU U1 upon initiation to download to the Xilinx programmable array the correct program.

Data for display as received over the serial communication link or as generated wholly or partly by CPU from image attribute data stored in memory elements U2 and/or U4 is coupled from the system data bus B_{D} to video RAM U13 under addressing control of the Xilinx programmable array U20. The Xilinx circuit handles generation of video control signals and acts as a bus master for the video address bus B_{VA} and video data bus B_{VD}. A video timing section of the programmable array U20 generates sequential pixel addresses for video RAM U13, and horizontal and vertical sync and blanking pulses for video encoder U21.

The programmable array U20 is coupled to a phase locked loop U23, responsive to the output of colorburst clock U26, for defining the video clock at four times the video subcarrier frequency determined by the burst clock. It is also possible to generate a video clock at four times the video frequency, coupled to programmable array U20, and to count down the video subcarrier frequency from the video clock using a counter in programmable array U20. Pixel addressing is handled by the programmable array U20 and is multiplexed with the system address bus B_{A} for time shared access to the video data with CPU U1. In particular, an internal counter in the programmable array U20 addresses the next pixel address via video address bus B_{VA} for two successive cycles of the video clock, and then system address bus B_{A} determines the video address for the next six video clock cycles. At the end of the two cycle period the pixel data is latched in the buffers that feed the pixel information through to the color palette U19.

The system clock Y1 and the burst clock U26 are asynchronous. Programmable logic circuits U5 and U6, which control interrupts and bus arbitration, will force digital processor U1 into a wait state if processor U1 attempts to access the video RAM outside of the predetermined time divisions allotted to it. Data transfer proceeds during the next cycle of time divisions allotted to processor U1.

During the six cycles of the video clock wherein the system address bus addresses the video data, the CPU U1 can manipulate the data in video RAM U13 in the same manner as it manipulates the system memory U2, and thus can effect changes in the image to be displayed. For example, image attributes stored in RAM U2, ROM U4 or downloaded along the serial communication path, such as the address or position and nature of lines, figures, alphanumeric characters and the like to be inserted into the display, can be decoded and entered into the video RAM data. Alternatively, a full frame or a segment of a full frame such as a logo or other image segment can be entered into the video RAM under control of CPU U1. Access of CPU U1 to video RAM U13 is quick enough to accomplish at least minimal animation in the image displayed. The particulars of the data entered in video RAM U13 by CPU U1 can be received from the serial communication link of controller U7 and stored in system RAM U2, or can be generated by programmed operations of CPU U1 in response to binary data received, stored routines in ROM U4, etc.

The illustrated embodiment is arranged to generate NTSC composite video signals. The timing of NTSC and PAL video signals is different, and the programming of the Xilinx programmable array can be arranged to accommodate either format. The Xilinx coding for operation of programmable array U20 is downloaded from system memory by the CPU U1 upon startup, for example from ROM U4. Jumper E1 on the circuit card sets a particular board for operation in the PAL or NTSC format such that CPU loads programmable array U20 appropriately. The jumper can also to effect other differences in the character and timing of the video signals for producing an NTSC or PAL output.

Color palette U19 includes a look up table addressed by the pixel data and by the programmable array U20. Under control of the programmable array U20 the color palette U19 decodes the four bit pixel data to select a particular proportion of each of the red, blue and green outputs, and to produce analog levels on the RGB outputs coupled to the video encoder U21. Whereas there are four bits available to each pixel, one of sixteen distinct colors can be selected at any one time. However, the correspondence of the sixteen possible pixel data values with a larger number of available color proportions stored in color palette U19 can be changed, providing additional selectable color proportions. The programmable array varies the RGB data associated with a given pixel data value by modifying addressing in the look up table as often as every horizontal video scan line. In this manner the sixteen pixel data values are remapped to allow many combinations of colors of pixels in the display.

The look up table in the color palette can be downloaded from the video RAM U13, from data received on the serial communication link, or can be loaded from static memory from system RAM U2 or system ROM U4. The look up table can contain, for example, sixteen 12-bit color lookup registers, each containing a definition of a distinct combination of red, blue and green color levels, allowing selection of any of 4,096 available colors. Of course the number of available colors can be changed by varying the number of available color definition bits. The red, blue and green data values each are each coupled, for example, to a four bit digital to analog converter in the color palette circuit U19, thereby providing sixteen discrete levels of intensity for each particular color or 4,096 (16³) distinct possibilities.

The RGB analog levels are coupled to video encoder U21, which modulates the subcarrier signal with the analog data from the color palette RGB outputs and with the synchronizing pulses generated by programmable array U20, thus generating a composite video signal which is readily displayed on an unmodified commercial television receiver T1-T4. A plurality of video buffers, comprising follower amplifiers and impedance matching circuits, separately drive the signals at the output ports P1-P4. While an indefinite number of video buffers and television receivers could be included, four have been shown for purposes of illustration.

Whereas the output of the circuit according to the invention is generated in a standard composite video format, the television receivers T1-T4 normally can be simply plugged into the signal lines coupled to output ports P1-P4, using standard coaxial cable. In the event that one or more of the television monitors lacks a composite video input, an RF modulator can be inserted between the output port and the antenna input of the respective receiver, such that the video signal can be decoded and displayed using the same circuits which otherwise process commercial television signals.

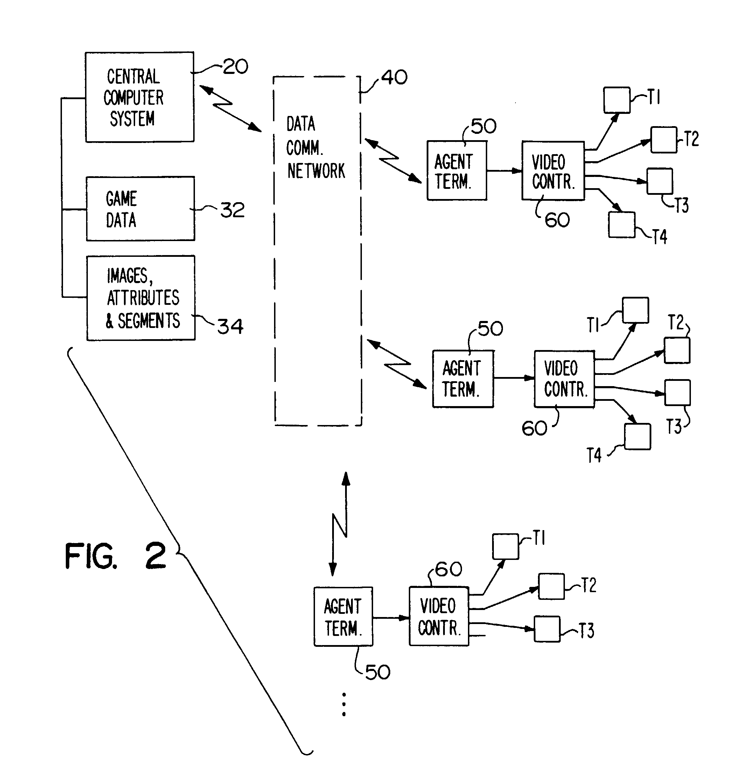

Fig. 2 illustrates the application of the invention to a gaming network of the type run by many state lottery commissions. A central lottery computer 20 in data communication with distributed agent terminals 50 over a data communication network 40 manages the sale of player entries to customers. The agent terminals are basically point of sale terminals, but may have various functions such as reading of marked entry forms, reading of issued tickets for comparing them to winning ticket data, etc. The central lottery computer typically handles entry validation functions by storing information relating to individual entries sold, for later comparison with the information on issued entries which are presented by the customers as winners. The central computer is coupled to a game data memory means 32 for storage of this information.

According to the invention the central computer also has additional memory capacity for storage of images, encoded attributes of images, or partial screen segments of images which can readily be downloaded to the agent terminals 50 over the data communication network. Some or all of the agent terminals in the data communication network are coupled to video controllers 60, which in accordance with the foregoing description are coupled to standard commercial television receivers located at or near the location of the agent terminals, for displaying game data to customers. The agent terminals may communicate with the communication port P5 of a display controller according to the invention, or may incorporate a display controller coupled to a communication port already provided in the agent terminal for bidirectional transmission of game data. The agent terminals simply pass received image data, image attribute data or image segment data to the respective video controller. Additionally, the agent terminals can add command data to the data received from the central computer 20, for example allowing the agent to select the sequence of available screens which the video controller 60 will display.

The gaming system of the invention is particularly useful in certain forms of games, but is also generally useful as a means for conveying game information and promotional information to customers. In connection with a keno game or the like, a large number of players may be interested in the same game at the same time. For example as successive winning entries are drawn in a keno game the players wish to compare the winning numbers with their list of entry numbers. The invention allows a plurality of television receivers to be distributed around the agent terminal location. The image screens displayed can be modified by CPU U1 to update them by insertion of additional winning numbers as they are drawn. The image screens can readily accommodate segments such as logos, late breaking news, photographs or artwork on the game or other subjects added to a basic presentation, and/or variation of the basic presentation to keep it interesting. The variations can include animation, blinking and/or dynamic transformation of colors, etc. These characteristics are available without substantial expense due to the use of a commercial television receiver as the ultimate display means.

## Claims

1. A wagering system, comprising:
- a central computer system (20) arranged for managing entry validation and/or crediting of winning entries in a wagering game having a plurality of players at diverse locations;
- a plurality of agent terminals (50) in data communication with the central computer system (20), the agent terminals (50) each being operable for managing input of player data and issue of player entries for a plurality of successive players involved commonly in wagering game, the agent terminals (50) being operable interactively for accepting entries from the players in the wagering game as a point of sale terminal, and paying on winning entries at a conclusion of the wagering game, in each case subject to supervisory control by the central computer (20);
- at least a subset of the agent terminals (50) each having a display controller (60) coupled thereto, the display controller (60) including a digital processor (U1) having means for data communication with an external system operable to supply encoded data to the digital processor (U1) to be displayed, the display controller being arranged for presenting to the players, based on such encoded data, information representing progress of the wagering game apart from management of the input of the player data and the issue of the player entries via the agent terminal (50);
- data memory means and program memory means coupled to the digital processor (U1), the data memory means including random access memory (U2) for storage of information at least partly defining an image to be displayed, under control of the digital processor (U1), and the digital processor (U1) being operable to produce image data therefrom;
- a control logic circuit (U20) coupled to the digital processor (U1), operable to feed the image data into means for storing a pixel field;
- video encoder means (U21) coupled to the control logic circuit (U20), for converting the pixel field into a composite video output;
- a plurality of video buffers (A1...A4) coupled to the composite video output of the video encoder means (U21), operable to transmit composite video information; and
- a plurality of standard commercial television receivers (T1...T4) coupled respectively to the video buffers (A1...A4), and operable to display the image, the receivers being non-interactive with players and limited to display of the information respecting progress of the wagering game.

2. The wagering system according to claim 1, further comprising a color palette circuit (U19) coupled to the control logic circuit (U20) and the video encoder means (U21), data in the pixel field identifying distinct color combinations defined by the color palette, for conversion by the video encoder means (U21).

3. The wagering system according to claim 2, further comprising a video RAM (U13) for storage of data in the pixel field, and wherein the video RAM (U13) is multiplexed for time shared access by the control logic circuit (U20), for feeding the data in the pixel field to the video encoder means (U21), and by the digital processor (U1), for modifying data in the video RAM (U13).

4. The wagering system according to claim 1, further comprising a system address bus (B_{A}), a system data bus (B_{D}), a video address bus (B_{VA}) and a video data bus (B_{VD}), and wherein the system address bus (B_{A}) is coupled to the data memory means, program memory means and control logic circuit (U20) for selecting operations under control of the digital processor, and the video address bus (B_{VA}) and video data bus (B_{VD}) are coupled to the control logic circuit (U20) for feeding pixel data to the video encoder means (U21).

5. The wagering system according to claim 4, further comprising a video RAM (U13) coupled between the control logic circuit (U20) and the video encoder means (U21), and wherein the control logic circuit (U20) is arranged for time shared access of the digital processor (U1) to pixel data in the video RAM (U13), for modifying an image to be displayed.

6. The wagering system according to claim 5, wherein the digital processor (U1) is operable for at least one of:
- downloading to the video RAM (U13) at least one of segments of the image to be displayed and complete images,
- modifying the image to be displayed according to at least one routine selected by the attributes, and
- inserting into the image to be displayed data encoded in information received from the central computer system (20).

## Patentansprüche

1. Ein Videospielsystem, welches umfaßt:
- ein zentrales Computersystem (20), welches die Bestätigung von Eingaben und/oder die Vergütung siegreicher Eingaben in einem Videospiel bearbeitet, an dem mehrere Mitspieler an verschiedenen Orten teilnehmen;
- eine Mehrzahl von Agenten-Terminals (50), die mittels Datenkommunikation mit dem zentralen Computersystem (20) verbunden sind, wobei jedes Agenten-Terminal (50) dazu dient, die Eingabe von Spielerinformationen und die Weitergabe von Spielereingaben der Vielzahl aufeinanderfolgender Spieler, die normalerweise an Videospielen beteiligt sind, zu bearbeiten; die Agenten-Terminals (50) sind interaktiv zu bedienen, nehmen als Verkaufsstellenterminals Eingaben der Spieler im Videospiel entgegen und nehmen bei einem Ende des Videospiels im Fall siegreicher Eingaben Auszahlungen vor, wobei sie in jedem Fall der überwachenden Kontrolle durch den zentralen Computer (20) unterliegen;
- mindestens eine Untergruppe von Agenten-Terminals (50), von denen jedes einzelne eine Kontrolleinheit (60) für ein Anzeigegerät besitzt und mit diesem verbunden ist; die Kontrolleinheit (60) für das Anzeigegerät beinhaltet einen digitalen Prozessor (U1), welcher Einrichtungen zur Datenkommunikation mit einem externen System besitzt, das dazu eingesetzt wird, verschlüsselte Daten an den digitalen Prozessor (U1) zu liefern, die dargestellt werden sollen; die Kontrolleinheit (60) des Anzeigegeräts ist dazu eingerichtet, Informationen, beruhend auf oben genannten verschlüsselten Daten und den Fortgang des Videospiels darstellend, für die Spieler anzuzeigen; daneben verwaltet die Kontrolleinheit (60) des Anzeigegeräts die Eingabe der Spielerinformationen und die Ausgabe der Spielereingaben über das Agenten-Terminal (50);
- Datenspeichereinrichtungen und Programmspeichereinrichtungen, die mit dem digitalen Prozessor (U1) verbunden sind, wobei die Datenspeichereinrichtung RAM (U2) beinhaltet, der dazu dient, vom digitalen Prozessor (U1) gesteuert Daten zu speichern, die zumindest teilweise ein Bild definieren, welches angezeigt werden soll; der digitale Prozessor (U1) kann dazu eingesetzt werden, Bildinformationen aus den oben genannten Daten zu erzeugen;
- einen logischen Kontroll-Schaltkreis (U20), der mit dem digitalen Prozessor (U1) verbunden ist und der dazu eingesetzt werden kann, die Bildinformationen an eine Einheit zu übergeben, die dazu geeignet ist, ein Pixel feld zu speichern;
- eine mit dem logischen Kontroll-Schaltkreis (U20) verbundene Video-Umsetzer Einheit (U21), die das Pixelfeld in eine Komposit-Video-Ausgabe umwandelt;
- eine Mehrzahl von Video-Puffern (A1-A4), die mit dem Ausgang der Video-Umsetzer Einheit (U21) verbunden sind, die dazu dienen, Komposit-Video-Informationen zu übertragen und
- eine Mehrzahl von Standard-Fernsehempfängern (T1-T4), die jeweils einzeln mit einem zugehörigen Video-Puffer (A1-A4) verbunden sind und dazu dienen, die Bildinformationen anzuzeigen, wobei die Empfänger nicht mit den Spielern interagieren und ausschließlich dazu dienen, Informationen anzuzeigen, die den Fortgang des Videospiels betreffen.

2. Ein System für Videospiele gemäß Anspruch 1, welches desweiteren einen Farbpaletten-Schaltkreis (U19) beinhaltet, der mit dem logischen Kontroll-Schaltkreis (U20) und der Video-Umsetzer Einheit (U21) verbunden ist, wobei Daten im Pixelfeld bestimmte Farbkombinationen kennzeichnen, die durch die Farbpalette definiert sind und diese Daten von der Video-Umsetzer Einheit (U21) umgesetzt werden.

3. Ein System für Videospiele gemäß Anspruch 2, welches desweiteren einen Video-RAM (U13) beinhaltet, der dazu dient, Daten im Pixelfeld zu speichern, wobei der Videospeicher (U13) im Multiplexbetrieb arbeitet, um die Zugriffszeiten aufzuteilen zwischen der logischen Kontrolleinheit (U20), die beim Zugriff Daten aus dem Pixelfeld in die Video-Umsetzer Einheit (U21) überträgt, und dem digitalen Prozessor (U1), der beim Zugreifen Daten im Video-RAM (13) modifiziert.

4. Ein System für Videospiele gemäß Anspruch 1, welches desweiteren einen System-Adressbus (B_{A}), einen System-Datenbus (B_{D}), einen Video-Adressbus (B_{VA}) und einen Video-Datenbus (B_{VD}) beinhaltet; der System-Adressbus (B_{A}) ist mit den Daten- und Programmspeichereinrichtungen und dem logischen Kontrollschaltkreis (U20) verbunden, um gesteuert vom digitalen Prozessor Operationen auszuwählen; der Video-Adressbus (B_{VA}) und der Video-Datenbus (B_{VD}) sind mit dem logischen Kontroll-schaltkreis (U20) verbunden, um Pixel informationen zu der Video-Umsetzer Einheit (U21) zu übertragen.

5. Ein System für Videospiele gemäß Anspruch 4, bei welchem desweiteren ein Video-RAM (U13) zwischen den logischen Kontrollschaltkreis (U20) und die Video-Umsetzer Einheit (U21) eingefügt ist, wobei der logische Kontrollschaltkreis (U20) dafür eingerichtet ist, einen Zugriff des digitalen Prozessors (U1) mit aufgeteilten Zugriffszeiten auf Pixelinformationen im Video-RAM (U13) zu ermöglichen, um ein Bild zu modifizieren, welches angezeigt werden soll.

6. Ein System für Videospiele gemäß Anspruch 5, wobei der digitale Prozessor für mindestens eine der folgenden Aufgaben eingesetzt werden kann:
- Übertragen mindestens eines Segments des Bildes, welches angezeigt werden soll, oder von vollständigen Bildern in den Video-RAM (U13);
- Modifizierung des Bildes, welches angezeigt werden soll, gemäß mindestens einer Routine, welche anhand von Attributen ausgewählt wird;
- Einfügen von Daten, die in Informationen enthalten sind, die vom zentralen Computersystem (20) empfangen wurden, in das Bild, welches angezeigt werden soll.

## Revendications

1. Un système de jeux vidéo, comprenant:
- un système central d'ordinateur (20) destiné à traiter les validations d'entrées et/ou la récompense d'entrées victorieuses dans un jeu vidéo auquel participent plusieurs joueurs à des endroits différents ;
- une pluralité de terminaux d'agent (50), qui sont connectés par communication de données au système central d'ordinateur (20), chaque terminal d'agent (50) servant à traiter l'entrée d'informations de joueurs et la transmission d'entrées de joueurs de la pluralité de joueurs successifs qui participent normalement à des jeux vidéo; les terminaux d'agent (50) peuvent être opérés de façon interactive pour recevoir, en tant que terminaux de points de vente, des entrées des joueurs dans le jeu vidéo, et pour faire des paiements en cas d'entrées victorieuses à la fin du jeu vidéo, en tout cas, ils étant sousmis au contrôle surveillant par l'ordinateur central (20);
- du moins un sous-groupe de terminaux d'agent (50) dont chacun possède une unité de contrôle (60) pour un afficheur et est connecté à celui-ci, l'unité de contrôle (60) pour l'afficheur comprenant un processeur numérique (U1) qui possède des moyens pour la communication de données avec un système extérieur qui est utilisé pour fournir des données codées à afficher au processeur numérique (U1); l'unité de contrôle (60) de l'afficheur est disposée pour présenter aux joueurs, sur la base des données codées susmentionnées, des informations qui représentent le progrès du jeu vidéo. En outre, l'unité de contrôle (60) de l'afficheur gère l'entrée des informations de joueurs et la transmission des entrées de joueurs par l'intermédiaire du terminal d'agent (50);
- des moyens de mémorisation de données et moyens de mémorisation de programme, qui sont connectés au processeur numérique (U1), les moyens de mémorisation de données comprenant une mémoire à accès sélectif (U2) qui sert à mémoriser des données sous le contrôle du processeur numérique (U1), qui, au moins en partie, définissent une image à afficher, le processeur numérique (U1) pouvant être utilisé pour produire des informations d'image de ces données susmentionnées;
- un circuit logique de contrôle (U20) qui est connecté au processeur numérique (U1) et qui peut être utilisé pour transmettre les informations d'image à des moyens se prêtant à mémoriser un champ de pixels;
- une unité vidéo de conversion (U21) connectée au circuit logique de contrôle (U20), qui est destinée à convertir le champ de pixels en un output vidéo composite;
- une pluralité de tampons vidéo (A1 - A4) qui sont connectés à la sortie de l'unité vidéo de conversion (U21) et sont destinés à transmettre des informations composites vidéo, et
- une pluralité de récepteurs standard de télévision (T1 - T4) qui sont connectés respectivement à un tampon vidéo associé (A1 - A4) et qui sont destinés à afficher les informations d'image, les récepteurs n'étant pas interactifs avec les joueurs et servant uniquement à afficher des informations qui concernent le progrès du jeu vidéo.

2. Un système pour jeux vidéo selon la revendication 1, qui comprend en outre un circuit (U19) de palette de couleurs, qui est connecté au circuit logique de contrôle (U20) et à l'unité vidéo de conversion (U21), des données dans le champ de pixels identifiant des combinaisons déterminées de couleurs, qui sont définies par la palette des couleurs, et ces données étant converties par l'unité vidéo de conversion (U21).

3. Un système pour jeux vidéo selon la revendication 2, qui comprend de plus une mémoire vidéo à accès sélectif (U13) qui sert à mémoriser des données dans le champ de pixels, la mémoire vidéo (U13) travaillant en multiplexage pour partager les temps d'accès entre l'unité logique de contrôle (U20) qui, lors de l'accès, transmet des données du champ de pixels à l'unité vidéo de conversion (U21), et le processeur numérique (U1) qui, lors de l'accès, modifie des données dans la mémoire vidéo à accès sélectif (U13).

4. Un système pour jeux vidéo selon la revendication 1, qui comprend en outre un bus d'adreses (B_{A}) du système, un bus de données (B_{D}) du système, un bus vidéo d'adresses (B_{VA}) et un bus vidéo de données (B_{VD}), ledit bus d'adresses (B_{A}) du système étant connecté aux moyens de mémorisation de données, aux moyens de mémorisation de programme et au circuit logique de contrôle (U20), afin de sélectionner des opérations sous le contrôle du processeur numérique. Le bus vidéo d'adresses (B_{VA}) et le bus vidéo de données (B_{VD}) sont connectés au circuit logique de contrôle (U20) pour transmettre des informations de pixel à l'unité vidéo de conversion (U21).

5. Un système pour jeux vidéo selon la revendication 4, dans le cas duquel une mémoire vidéo à accès sélectif (U13) est intercalée entre le circuit logique de contrôle (U20) et l'unité vidéo de conversion (U21), le circuit logique de contrôle (U20) étant disposé pour permettre un accès en temps partagé du processeur numérique (U1) à des informations de pixel dans la mémoire vidéo à accès sélectif (U13) afin de modifier une image à afficher.

6. Un système pour jeux vidéo selon la revendication 5, le processeur numérique pouvant être utilisé pour l'une du moins des taches suivantes:
- transmission d'un segment du moins de l'image à afficher, ou d'images complètes dans la mémoire vidéo à accès sélectif (U13);
- modification de l'image à afficher selon du moins une routine qui est choisie au moyen d'attributs;
- insertion de données qui sont contenues dans des informations reçues du système central d'ordinateur (20), dans l'image à afficher.
